# DEMANDE DE BREVET EUROPEEN

(11) **EP 1 106 465 A1**
(43) Date de publication de la demande: **13.06.2001**
(21) Numéro de dépôt: 00402823.9
(22) Date de dépôt: 12.10.2000
(51) Int. Cl.: B60T 13/569

(54) **Support de membrane pour amplificateur de force de freinage et amplificateur de force de freinage incorporant un tel support**

(30) Priorité: 07.12.1999 FR 9915430
(71) Demandeur: Delphi Technologies, Inc., Troy, MI 48007 (US)
(72) Inventeur: Castel, Philippe, 75005 Paris (FR); Lebaudy, Gérard, 95150 Taverny (FR)
(74) Mandataire: Jacobson, Claude

(57) **Abrégé**

Ce support (18) de membrane pour amplificateur de force de freinage pour véhicule automobile comprend une zone centrale (40) destinée à venir se fixer sur un piston (14) de l'amplificateur de freinage et une zone périphérique (41). Au moins une partie du support (18) s'étendant à partir de la zone centrale en direction de la zone périphérique comporte une structure stratifiée constituée par une superposition d'au moins deux plaques (42, 44) solidaires.

## Description

La présente invention concerne les amplificateurs de force de freinage pour véhicule automobile et se rapporte plus particulièrement à un support de membrane pour de tels amplificateurs de force de freinage.

Les systèmes de freinage comportent généralement un maître cylindre destiné à appliquer une pression du fluide de freinage au frein d'un véhicule lors de l'actionnement d'une pédale de frein.

Entre le maître cylindre et la pédale de frein est interposé un amplificateur de force de freinage, par exemple à dépression.

Il existe différents types d'amplificateurs de force de freinage.

Par exemple, un tel amplificateur comporte, de façon connue, une enceinte, une membrane montée sur un support et séparant l'enceinte en une chambre avant qui est équipée de moyens de raccordement à une source de dépression et une chambre arrière, un piston déplaçable axialement dans l'enceinte et sur lequel est monté le support, un plongeur monté axialement déplaçable dans le piston sous la commande d'une pédale de frein entre une position avancée instable de freinage et une position reculée stable de repos, et un clapet coopérant avec des sièges prévus sur le piston et sur le plongeur de manière à, d'une part, isoler la chambre arrière de l'atmosphère ambiant et mettre cette dernière en communication avec la chambre avant, lorsque le plongeur est en position de repos, et d'autre part, isoler la chambre arrière de la chambre avant et mettre la chambre arrière en communication avec l'atmosphère ambiant lors du freinage.

Un tel amplificateur permet de multiplier la force de freinage appliquée sur la pédale de frein par un coefficient multiplicateur pouvant aller par exemple jusqu'à 9.

Les efforts supportés par la membrane et son support sont relativement importants. En particulier, la zone radialement interne du support, fixée sur le piston, est extrêmement sollicitée dans la mesure où la zone périphérique opposée est libre d'osciller.

Par conséquent, cette zone est soumise à des efforts de flexion que l'acier, qui est souvent utilisé pour réaliser les supports, n'est pas capable de supporter durablement, à moins d'employer de fortes épaisseurs. Le but de l'invention est de palier cet inconvénient.

Elle a donc pour objet un support de membrane pour amplificateur de force de freinage pour véhicule automobile comprenant une zone centrale destinée à venir se fixer sur un piston de l'amplificateur de freinage et une zone périphérique, caractérisé en ce qu'au moins une partie du support s'étendant à partir de la zone centrale en direction de la zone périphérique comporte une structure stratifiée constituée par une superposition d'au moins deux plaques solidaires.

On augmente ainsi la résistance à la flexion du support sans nécessité d'accroître l'épaisseur du support.

Ce support de membrane peut également comporter une ou plusieurs des caractéristiques suivantes, prises isolément ou selon toutes les combinaisons techniquement possible:
- les plaques sont réalisées en acier,
- les plaques sont réalisées en aluminium,
- entre les plaques est placé un matériau d'assemblage comportant un élément choisi parmi du polypropylène ou du polyamide,
- la totalité du support est réalisée à partir de ladite structure stratifiée,
- la zone périphérique comporte un bord plié ou recourbé,
- lesdites plaques comportent des déformations locales complémentaires ménagées au voisinage de leur zone périphérique,
- il comporte des moyens additionnels de solidarisation desdites plaques, comprenant au moins un élément choisi parmi des vis, des rivets, une soudure et des boulons, prévus au voisinage de la zone périphérique.

L'invention a également pour objet un procédé de fabrication d'un support de membrane pour amplificateur de force de freinage pour véhicule automobile, caractérisé en ce qu'il consiste à emboutir une tôle stratifiée constituée par un assemblage de plaques empilées entre lesquelles est placé un matériau de solidarisation desdites plaques.

Enfin, l'invention a également pour objet un amplificateur de force de freinage du type précité, caractérisé en ce que le support est constitué par un support de membrane tel que définit ci-dessus.

D'autres caractéristiques et avantages ressortiront de la description suivante, donnée uniquement à titre d'exemple, et faite en référence aux dessins annexés sur lesquels:
- la figure 1 est une vue en coupe longitudinale d'un amplificateur de force de freinage;
- la figure 2 est une vue de détail, à plus grande échelle, du support de membrane de l'amplificateur de la figure 1 ; et
- la figure 3 est une vue en perspective d'une partie d'un support de membrane selon un mode de réalisation particulier.

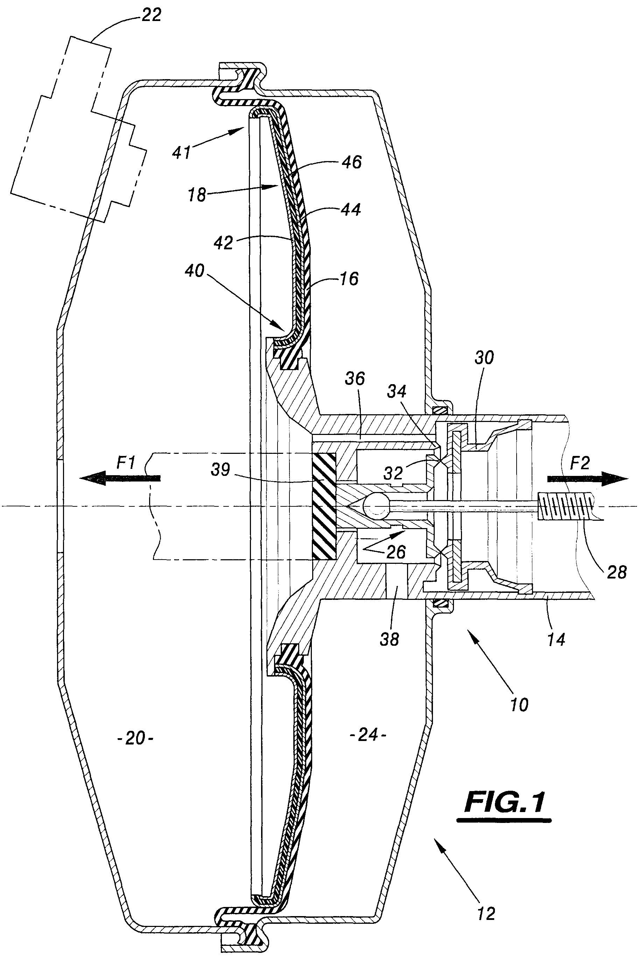

Sur la figure 1, on a représenté une vue en coupe d'un amplificateur de force de freinage à dépression, désigné par la référence numérique générale 10.

Il comporte: une enceinte close 12; un piston 14 déplaçable axialement dans l'enceinte et dont une partie est en communication avec l'air ambiant ; une membrane 16 qui est montée sur un support de membrane 18 solidaire du piston 14 et qui sépare l'enceinte 12 en une chambre avant 20 équipée de moyens 22 de raccordement à une source de dépression (non représentée) et une chambre arrière 24 dans laquelle règne une pression variable ; un plongeur 26 monté axialement déplaçable dans le piston 14 et auquel est rendu solidaire une tige de commande 28 raccordée à la pédale de frein d'un véhicule automobile ; et un clapet 30 coopérant avec des sièges 32 et 34 portés par le plongeur et le piston, respectivement.

Des passages, 36 et 38, sont ménagés dans le piston 14 pour mettre en communication respectivement la chambre avant 20 avec la chambre arrière 24 et pour mettre en communication la chambre arrière 24 avec l'atmosphère ambiant sous la commande du plongeur 26 et du clapet 30.

Le plongeur 26 est monté déplaçable dans le piston 14 entre une position avancée de freinage et une position reculée de repos. Des moyens élastiques non représentés sollicitent le plongeur 26 en position de repos.

Sur la figure 1, l'amplificateur de force de freinage 10 est représenté en position de repos. Dans cette position, le clapet 30 généralement réalisé en caoutchouc, en appui sur le siège 32 ou « siège d'air » du plongeur 26 est espacé du siège 34 ou « siège de dépression » du piston 14.

Dès lors, les chambres avant 20 et arrière 24 sont en communication par l'intermédiaire des passages 36 et 38 et sont à une pression identique, qui est celle délivrée par la source de dépression avec laquelle l'appareil est en communication.

Lorsque l'on exerce un effort sur la pédale de frein, le plongeur 26 se déplace dans la direction représentée par la flèche F1, c'est à dire en direction de la chambre avant 20. Au cours de ce mouvement, le plongeur 26 exerce un effort sur la partie centrale d'un disque de réaction 39 élastiquement déformable disposé dans une coupelle (non représentée).

La déformation périphérique consécutive du disque 39 engendre un déplacement du piston 14 selon la direction représentée par la flèche F2, ce qui provoque l'application du siège 34 du piston contre le clapet 30 et le déplacement de ce dernier selon la direction F2.

Ce déplacement provoque un espacement du clapet 30 par rapport au siège 32 du plongeur 26 et donc une mise en communication de la chambre arrière 24 avec l'atmosphère par l'intermédiaire du passage 38, par mise en communication de la chambre arrière 24 avec la partie du piston 14 qui communique avec l'air ambiant.

On obtient ainsi une amplification de la force de freinage due à l'apparition d'une différence de pression de part et d'autre de la membrane 16.

Comme cela a été mentionné précédemment, cette amplification de la force de freinage engendre un effort considérable sur le support et, en particulier sur la partie du support située au voisinage de la zone radialement interne 40 de ce dernier par laquelle il vient se fixer sur le piston 14.

On voit en effet que, alors que la zone radialement externe 41 du support 18 est libre d'osciller lorsqu'il est soumis à une différence de pression entre les chambres avant 20 et arrière 24, la zone radialement interne 40 du support est solidaire du piston 14 et est dès lors soumis à un effort de flexion important.

La conception d'un tel support repose sur la prise en compte de diverses contraintes:
- tenue en endurance dans les conditions normales de sollicitation du système de freinage, et
- déformation maximale raisonnable.

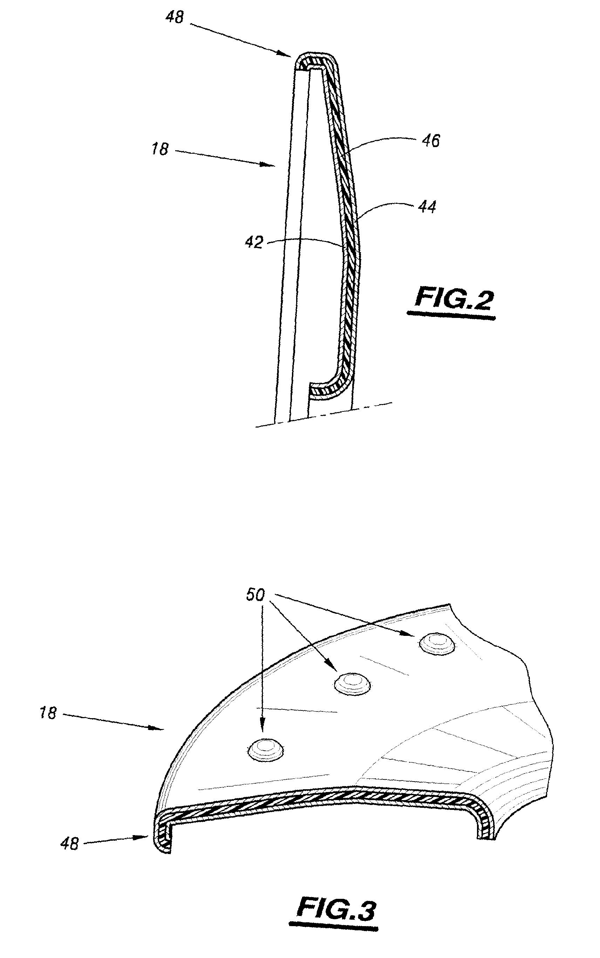

En se référant également à la figure 2, afin que le support soit en mesure de ne pas se déformer excessivement sous ces efforts, au moins une partie du support s'étendant à partir de la zone centrale 40 en direction de la zone périphérique 41 comporte une structure stratifiée.

Cette structure stratifiée est constituée par une superposition d'au moins deux plaques 42 et 44 solidaires.

Une couche 46 de matériau d'assemblage s'étend entre ces plaques 42 et 44.

Par exemple, les plaques 42 et 44 sont réalisées en acier ou en aluminium.

Le matériau d'assemblage, quant à lui, est constitué par un matériau capable de solidariser fermement les plaques l'une contre l'autre de manière à éviter que l'une d'elles ne coulisse par rapport à l'autre. On réduit ainsi la déformation par flexion du support dans la mesure où le déplacement mutuel des plaques engendré lors d'une courbure de ces dernières est évité.

Par exemple, le matériau d'assemblage comporte du polypropylène ou du polyamide.

On pourrait également utiliser, en variante, une colle appropriée pour l'utilisation envisagée, c'est à dire capable de solidariser les plaques pour éviter un déplacement de l'une d'elle par rapport à l'autre.

Alors que dans l'exemple de réalisation représenté sur les figures 1 et 2 la couche 46 d'assemblage présente une structure continue, elle pourrait également consister en une couche discontinue dans la mesure où elle permet d'éviter tout glissement des deux plaques 42 et 44 l'une par rapport à l'autre.

Comme on le voit également sur la figure 3, la partie du support 18 située au voisinage de la zone d'extrémité peut être pourvue de moyens additionnels de solidarisation des plaques l'une sur l'autre.

Ces moyens de fixation complémentaires peuvent, par exemple, être réalisés en dotant la zone périphérique externe d'un bord plié 48 ou tombé, ou en ménageant dans les plaques 42 et 44, de préférence au voisinage de leur zone périphérique, des déformations locales obtenues par poinçonnage, telles que 50, se présentant, par exemple, sous la forme de concavités ou de trous, et adaptées pour éviter conjointement avec la présence de la couche 46 de matériau d'assemblage que l'une des plaques 42 et 44 ne coulisse par rapport à l'autre.

Enfin , ces moyens de fixation complémentaires pourraient être réalisés sous la forme de moyens de fixation par vis, par rivets, par soudure, ou par boulons, éventuellement combinés, disposés au voisinage de la zone périphérique du support.

Par exemple, le support 18 est réalisé par emboutissage d'une tôle stratifiée comportant deux plaques d'acier ayant chacune une épaisseur de 0,4mm ou 0,5mm, avec interposition d'un matériau thermoplastique d'épaisseur d'environ 0,5mm.

Il a été constaté qu'un tel support présente un gain de poids d'environ 50% par rapport à un support traditionnel, tout en présentant une résistance à la flexion accrue. On constate en effet que la flexion ainsi obtenue correspond à celle d'un support d'acier présentant une épaisseur accrue d'environ 25%.

Enfin, alors que dans les exemples de réalisation décrits en référence aux figures 1 à 3, le support est réalisé à partir d'une structure stratifiée comprenant deux plaques solidaires, cette structure pourrait également être réalisée en utilisant un nombre supérieur de plaques.

## Revendications

1. Support de membrane pour amplificateur de force de freinage pour véhicule automobile, comprenant une zone centrale (40) destinée à venir se fixer sur un piston (14) de l'amplificateur de freinage et une zone périphérique (41), caractérisé en ce qu'au moins une partie du support (18) s'étendant à partir de la zone centrale en direction de la zone périphérique comporte une structure stratifiée constituée par une superposition d'au moins deux plaques (42, 44) solidaires.

2. Support de membrane selon la revendication 1, caractérisé en ce que les plaques sont réalisées en acier.

3. Support de membrane selon la revendication 1, caractérisé en ce que les plaques sont réalisées en aluminium.

4. Support de membrane selon l'une quelconque des revendications 1 à 3, caractérisé en ce qu'entre les plaques est placé un matériau d'assemblage comportant un élément choisi parmi du polypropylène ou du polyamide.

5. Support de membrane selon l'une quelconque des revendications 1 à 4, caractérisé en ce que la totalité du support est réalisée à partir de ladite structure stratifiée.

6. Support de membrane selon la revendication 5, caractérisé en ce que la zone périphérique comporte un bord plié (48).

7. Support de membrane selon l'une des revendications 5 et 6, caractérisé en ce que lesdites plaques comportent des déformations locales (50) complémentaires ménagées au voisinage de leur zone périphérique.

8. Support de membrane selon l'une quelconque des revendications 5 à 7, caractérisé en ce qu'il comporte des moyens additionnels de solidarisation desdites plaques, comprenant au moins un élément choisi parmi des vis, des rivets, une soudure et des boulons, prévus au voisinage de la zone périphérique.

9. Procédé de fabrication d'un support de membrane pour amplificateur de force de freinage pour véhicule automobile, caractérisé en ce qu'il consiste à emboutir une tôle stratifiée constituée par un assemblage de plaques (42, 44) empilées entre lesquelles est placé un matériau de solidarisation desdites plaques.

10. Amplificateur de force de freinage comprenant une enceinte (12), une membrane (16) montée sur un support (18) et séparant l'enceinte en une chambre avant (20) qui est équipée de moyens (22) de raccordement à une source de dépression et une chambre arrière (24), un piston (14) déplaçable axialement dans l'enceinte et sur lequel est monté le support (18), un plongeur (26) monté déplaçable axialement dans le piston (14) sous la commande d'une pédale de frein entre une position avancée instable de freinage et une position reculée stable de repos, et un clapet (30) coopérant avec des sièges (32, 34) prévus sur le piston et sur le plongeur de manière à, d'une part, isoler la chambre arrière (24) de l'atmosphère ambiant et mettre cette dernière en communication avec la chambre avant (20), lorsque le plongeur est en position de repos et, d'autre part, isoler la chambre arrière (24) de la chambre avant (20) et mettre la chambre arrière (24) en communication avec l'atmosphère ambiant lors du freinage, caractérisé en ce que le support (18) est constitué par un support de membrane selon l'une quelconque des revendications 1 à 8 .
